# EUROPEAN PATENT APPLICATION

(11) **EP 3 800 561 A1**
(43) Date of publication of application: **07.04.2021**
(21) Application number: 19837095.9
(22) Date of filing: 11.07.2019
(51) Int. Cl.: G06F 16/532, G06N 3/08, G06T 7/13, H04N 21/4728, H04N 21/472

(54) **ELECTRONIC DEVICE AND CONTROL METHOD FOR ELECTRONIC DEVICE**

(30) Priority: 19.07.2018 KR 20180084326
(71) Applicant: Samsung Electronics Co., Ltd., Suwon-si 16677 (KR)
(72) Inventor: JEONG, Gohwoon, Suwon-si, Gyeonggi-do 16677 (KR); LEE, Sihyung, Suwon-si, Gyeonggi-do 16677 (KR); KIM, Hwanchul, Suwon-si, Gyeonggi-do 16677 (KR); OH, Seokmin, Suwon-si, Gyeonggi-do 16677 (KR); LEE, Jungkun, Suwon-si, Gyeonggi-do 16677 (KR); HYUN, Daeeun, Suwon-si, Gyeonggi-do 16677 (KR)
(74) Representative: Walaski, Jan Filip
(86) International application number: PCT/KR2019/008576
(87) International publication number: WO 2020/017827

(57) **Abstract**

Disclosed is an electronic apparatus. The disclosed apparatus includes a display; a communicator; a processor; and a memory, the memory being configured to store instructions set for the processor to: obtain a plurality of images relevant to media content being displayed on the display, which are stored for a preset period of time with respect to a point in time when an object identifying command that requests identification of an object contained in the media content is received, as the command is received from a different electronic apparatus through the communicator, obtain at least one candidate image that contains the object being displayed, by identifying objects contained in the plurality of images, and transmit the at least one candidate image to the different electronic apparatus by controlling the communicator.

Further, a part of the electronic apparatus may use an AI data recognition model learned based on at least one of rule-based model or machine learning, a neural network or a deep-learning algorithm.

The rule-based model or the AI data recognition model may identify an object contained in an image by regarding the image as an input value.

## Description

### [TECHNICAL FIELD]

The disclosure relates to a method of generating information relevant to media content and providing the information to a user.

### [BACKGROUND ART]

A latest television (TV) is able to display information about goods registered as an advertisement at a lower side on a screen through an Internet connection function while a viewer is watching a program, and guide the viewer to select, check and purchase desired goods.

Further, the TV is able to receive data from a viewer and provide information requested by a user from content contained in broadcast content. Like this, the TV employs the Internet connection function to provide various pieces of information to meet the needs of the viewer.

### [DISCLOSURE]

### [TECHNICAL PROBLEM]

When a viewer searches for desired information while watching a TV, but a name of an object to be subjected to an information search is not correctly spelled, the viewer may have to cumbersomely stop watching the TV and waste a lot of time to do an accurate search.

Further, when found information is displayed on a TV, it may be inconvenient for a viewer to keep on watching media content the viewer is watching.

Accordingly, there is needed a method of facilitating object selection for an information search, and separately checking a search result.

### [TECHNICAL SOLUTION]

According to an embodiment, an electronic apparatus may include: a display; a communicator; a processor; and a memory, the memory being configured to store instructions set for the processor to: obtain a plurality of images relevant to media content being displayed on the display, which are stored for a preset period of time with respect to a point in time when an object identifying command that requests identification of an object contained in the media content is received, as the command is received from a different electronic apparatus through the communicator, obtain at least one candidate image that contains the object being displayed, by identifying objects contained in the plurality of images, and transmit the at least one candidate image to the different electronic apparatus by controlling the communicator.

According to an embodiment, a different electronic apparatus may include: a touch screen display; a communicator; a processor; and a memory, the memory being configured to store instructions set for the processor to: control the touch screen display to display an information search user interface that guides a search request for information relevant to an object contained in media content being displayed in an electronic apparatus, transmit an object identifying command, which requests identification of an object contained in media content being reproduced in the electronic apparatus, to the electronic apparatus, and receive at least one candidate image obtained in the electronic apparatus based on the request, by controlling the communicator as an input for selecting an information search object included in the user interface, and display the at least one received candidate image by controlling the touch screen display.

According to an embodiment, a method of controlling an electronic apparatus may include obtaining a plurality of images relevant to media content being displayed on a display of the electronic apparatus, which are stored for a preset period of time with respect to a point in time when an object identifying command that requests identification of an object contained in the media content is received, as the command is received from a different electronic apparatus; obtaining at least one candidate image that contains the object being displayed, by identifying objects contained in the plurality of images; and transmitting the at least one candidate image to the different electronic apparatus.

According to an embodiment, a method of controlling a different electronic apparatus may include displaying an information search user interface that guides a search request for information relevant to an object contained in media content being displayed in an electronic apparatus; transmitting an object identifying command, which requests identification of an object contained in media content being reproduced in the electronic apparatus, to the electronic apparatus, and receiving at least one candidate image obtained in the electronic apparatus based on the request, as an input for selecting an information search object included in the user interface, and displaying the at least one received candidate image.

According to an embodiment, a server may include a data recognizer configured to obtain a speech and a plurality of images; a data processor configured to identify content of the speech to obtain speech content, which requests a search for relevant information about an object contained in media content being reproduced in an electronic apparatus, and identify the object contained in the plurality of images to obtain at least one candidate image based on the speech content; and a data output unit configured to transmit the at least one candidate image to another electronic apparatus.

### [ADVANTAGEOUS EFFECTS]

According to an embodiment of the disclosure, a user can easily select an object for which media content being reproduced in an electronic apparatus is searched.

According to an embodiment of the disclosure, a search result is displayed on a separate apparatus, so that a viewer can check the search result while fully watching a TV.

According to an embodiment of the disclosure, a plurality of images is used to identify an object, thereby improving accuracy in a search.

According to an embodiment of the disclosure, it is possible to generate additional information based on feedback on a user's search result.

### [DESCRIPTION OF DRAWINGS]

FIG. 1 illustrates a situation that information related to media content reproduced in an electronic apparatus is recommended through a user interface displayed on another electronic apparatus in a system for recommending information relevant to media content according to an embodiment.
FIG. 2 illustrates a situation that an electronic apparatus receives a user's speech and recommends information relevant to media content reproduced in the electronic apparatus in a system for recommending relevant information according to an alternative embodiment.
FIG. 3 illustrates a situation that a server identifies an object included in an image and recommends information relevant to media content reproduced in the electronic apparatus in a system for recommending relevant information according to an alternative embodiment.
FIG. 4 illustrates a situation that information relevant to media content reproduced in the electronic apparatus is recommended as another electronic apparatus receives a speech in a system for recommending relevant information according to an alternative embodiment.
FIG. 5 illustrates situations that an electronic apparatus according to an embodiment obtains a plurality of images.
FIG. 6 illustrates situations that another electronic apparatus displays a candidate image and displays a search result on an object included in the candidate image in a system for recommending relevant information according to an embodiment.
FIG. 7 illustrates situations that another electronic apparatus displays a search result on a person in a system for recommending relevant information according to an embodiment.
FIG. 8 illustrates situations that another electronic apparatus displays a search result on goods in a system for recommending relevant information according to an embodiment.
FIG. 9 illustrates situations that another electronic apparatus provides a search list in a system for recommending relevant information according to an embodiment.
FIG. 10 illustrates situations that a user's feedback is utilized in a system for recommending relevant information according to an embodiment.
FIG. 11 is a flowchart showing a situation that information related to media content reproduced in an electronic apparatus is recommended through a user interface displayed on another electronic apparatus in a system for recommending information relevant to media content according to an embodiment.
FIG. 12 is a flowchart showing a situation that an electronic apparatus receives a user's speech and recommends information relevant to media content reproduced in the electronic apparatus in a system for recommending relevant information according to an alternative embodiment.
FIG. 13 is a flowchart showing a situation that a server identifies an object included in an image and recommends information relevant to media content reproduced in the electronic apparatus in a system for recommending relevant information according to an alternative embodiment.
FIG. 14 is a flowchart showing a situation that information relevant to media content reproduced in the electronic apparatus is recommended as another electronic apparatus receives a speech in a system for recommending relevant information according to an alternative embodiment.
FIG. 15 is a schematic block diagram of an electronic apparatus, another electronic apparatus and a server according to an embodiment.
FIG. 16 is a block diagram of a processor according to an embodiment.

### [MODE FOR INVENTION]

Hereinafter, embodiments of the disclosure will be described in detail with reference to the accompanying drawings so as to be easily carried out by a person having an ordinary skill in the art to which the disclosure pertains. However, the disclosure may be embodied in various different forms, but not limited to the embodiments set forth herein. Further, parts unrelated to the descriptions are omitted to clearly illustrate the disclosure in the drawings, and like elements refer to like elements throughout.

Terms to be used in the disclosure will be selected as currently used general terms in consideration of functions mentioned in the disclosure, but may mean different terms according to intent of those skilled in the art, precedents, the advent of new technology, etc. Therefore, the terms set forth herein need to be construed based on their meaning and content throughout the following descriptions rather than naming.

Further, terms used in the disclosure are just used for describing a specific embodiment, but not intended to limit the disclosure. Unless otherwise specified clearly in the context, a singular form may include a plural form. Further, throughout the specification, when a certain part is "connected" to another part, they may be not only "directly connected" but also "electrically connected" with an additional device between. Further, when a certain part "includes" a certain element, it does not exclude other elements unless otherwise mentioned in particular, but may further include another element.

"The" or the like determiner used in the specification, in particular, claims may indicate both the singular form and the plural form. Further, steps for describing a method according to the disclosure may be carried out in proper order unless otherwise specified clearly. However, the method of the disclosure is not limited to description order.

Phrases such as "according to some embodiments", "according to an embodiment", etc. in various sentences of the specification do not necessarily indicate the same embodiment.

Some embodiments of the disclosure may be expressed with functional block configurations and various processing steps. Some or all of such functional blocks may be achieved by various numbers of hardware and/or software configurations to implement specific functions. For example, the functional blocks of the disclosure may be realized by one or more microprocessors, or circuit configurations for a predetermined function. Further, for example, the functional blocks of the disclosure may be realized by various programming or scripting languages. The function blocks may be realized by an algorithm to be executed in one or more processors. Further, the disclosure may employ the conventional technologies for electronic environment setting, signal processing and/or data processing, etc. "Mechanism", "element", "means", "configuration" and the like terms may be widely used without being limited to mechanical and physical configurations.

Further, connection lines or connection members between elements shown in the drawings merely illustrate functional connections and/or physical or circuit connections. In an actual apparatus, connection between elements may be achieved by the members various replaceable or additional functional, physical or circuit connections.

Below, the disclosure will be described in detail with reference to the accompanying drawings.

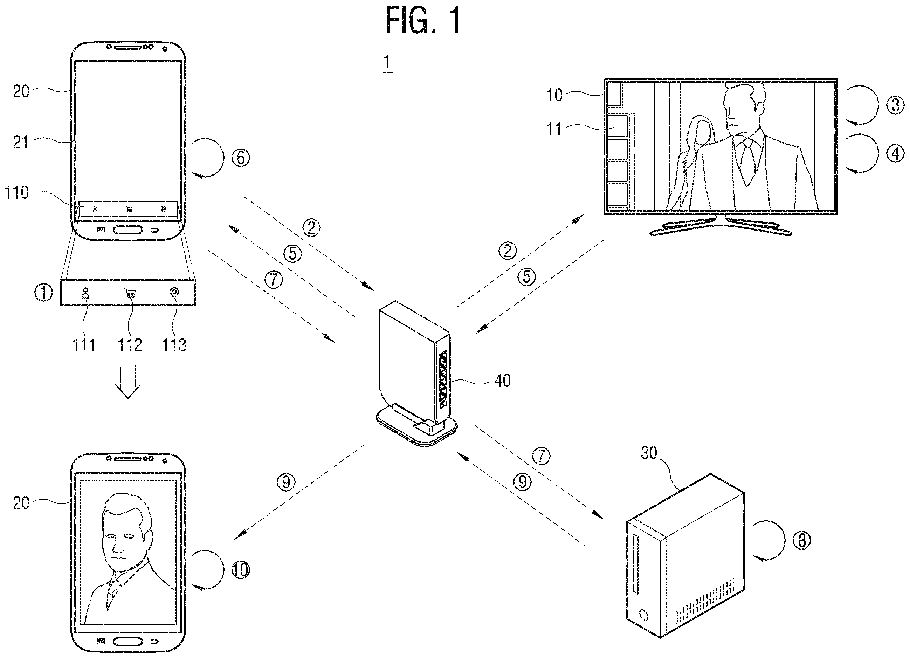

FIG. 1 illustrates a situation that information related to media content reproduced in an electronic apparatus is recommended through a user interface displayed on another electronic apparatus in a system for recommending information relevant to media content according to an embodiment.

Referring to FIG. 1, a system 1 for recommending information relevant to media content (hereinafter, referred to as a relevant information recommendation system) may include an electronic apparatus 10, a different electronic apparatus 20, a server 30, or a third apparatus (for example, a gateway) 40. However, the elements of the relevant information recommendation system 1 are not limited to above elements, and an additional element needed for operation of the relevant information recommendation system 1 may be included, or some among the foregoing elements may be excluded.

The electronic apparatus 10, the different electronic apparatus 20, the server 30, or the third apparatus 40 may perform communication using a communicator included therein.

According to an embodiment, the electronic apparatus 10, the different electronic apparatus 20, the server 30, or the third apparatus 40 may establish a communication network based on a wired or wireless communication method. The electronic apparatus 10, the different electronic apparatus 20, the server 30, or the third apparatus 40 may include a wireless communicator (for example, a cellular communication module, a wireless local area communication module, or a global navigation satellite system (GNSS) communication module) or a wired communicator (for example, a local area network (LAN) communication module, or a power line communication module), and communicate with an external electronic apparatus by the corresponding communicator among them through a first network (for example, Bluetooth, Wi-Fi direct, infrared data association (IrDA) or the like near field communication network) or a second network (for example, a cellular network, Internet, a computer network (e.g. a local area network (LAN) or wide area (WAN). The electronic apparatus 10, the different electronic apparatus 20, and the server 30 may respectively include the communicators provided as a single chip or separate chips.

According to an embodiment, the electronic apparatus 10 and the different electronic apparatus 20 may include an image display apparatus (for example, a television (TV)), which is able to process an image signal received from the outside and visually displaying the processed image, but not limited thereto and may be embodied by an apparatus that includes a memory and a processor. For example, the electronic apparatus 10 and the different electronic apparatus 20 may be embodied by various image display apparatuses such as a mobile phone, a smartphone, a tablet personal computer (PC), a digital camera, a camcorder, a laptop computer, a tablet PC, a desktop computer, an electronic book terminal, a digital broadcasting terminal, personal digital assistants (PDA), a portable multimedia player (PMP), an MP3 player, a wearable device, etc.

According to an alternative embodiment, the electronic apparatus 10 may include a large-screen display and be of a stationary type on the contrary to the different electronic apparatus 20. Alternatively, the electronic apparatus 10 may include a digital broadcast receiver capable of receiving a digital broadcast. The different electronic apparatus 20 may include a small-screen display and be of a mobile type on the contrary to the electronic apparatus 10.

According to an embodiment, the electronic apparatus 10 or the different electronic apparatus 20 may provide a service needed for a user through an app (or an application program) (e.g.: an alarm app, a picture (gallery) app, etc.) stored therein.

According to an alternative embodiment, the server 30 may include a plurality of servers including a first server and a second server. For example, the first server may refer to a server that stores various pieces of information relevant to media content, and the second server may refer to a server that performs a function related to voice recognition. However, there are no limits to this example. For instance, the server 30 may perform both the function of storing various pieces of information related to media content and the function related to voice recognition.

The third apparatus 40 may, for example, may include a home gateway, a relay, an access point (AP), a hub, etc. The electronic apparatus 10, the different electronic apparatus 20 and the server 30 may be connected via the third apparatus 40. However, there are no limits to this, and the electronic apparatus 10, the different electronic apparatus 20 and the server 30 may be connected directly.

Below, a method of using the relevant information recommendation system 1 according to an embodiment will be described.

At operation ①, the different electronic apparatus 20 may execute an information search program (or an application program) for guiding an information search request for an object contained in media content being reproduced in the electronic apparatus 10, and display an information search user interface 110. The different electronic apparatus 20 may receive a user's input through the information search user interface 110. The user interface 110 may include at least one information search object that requests execution of an information search for a set object.

According to an alternative embodiment, the information search user interface 110 may include a first information search object 111, a second information search object 112, and a third information search object 113. The first information search object 111 may, for example, be a biographical information search object. The second information search object 112 may, for example, be goods information search object. The third information search object 113 may, for example, be a place information search object.

According to an embodiment, a user may use the information search user interface 110 to proceed with a search without executing a search application included in the different electronic apparatus 20 for an information search and making an input for a target that the user wants to search for.

For example, when the different electronic apparatus 20 receives a user input for selecting the biographical information search object, i.e. the first information search object 111, the different electronic apparatus 20 may detect and recognize a person in an image that the electronic apparatus 10, with which the different electronic apparatus 20 has established communication, is displaying on a display 11, and provide information. Alternatively, when the different electronic apparatus 20 receives a user input for selecting the goods information search object, i.e. the second information search object 112, the different electronic apparatus 20 may detect and recognize goods in an image that the electronic apparatus 10 is displaying on the display 11, and provide information. Alternatively, when the different electronic apparatus 20 receives a user input for selecting the place information search object, i.e. the third information search object 113, the different electronic apparatus 20 may detect and recognize a place in an image that the electronic apparatus 10 is displaying on the display 11, and provide information.

According to an embodiment, the different electronic apparatus 20 may receive a user input for selecting the first information search object 111.

According to an embodiment, an information search target corresponding to each information search object is not limited to the foregoing description. For example, the information search program of guiding the request for the information search for the object contained in the media content may provide a user interface through which the information search target is modifiable.

At operation ②, the different electronic apparatus 20 may transmit the object identifying command to make a request for detecting and identify an object, which the electronic apparatus 10 is displaying on the display 11, to the third apparatus 40 in response to a user input for selecting one of the information search objects.

According to an embodiment, the different electronic apparatus 20 may transmit the object identifying command to make a request for detecting and identify a person among objects, which the electronic apparatus 10 is displaying on the display 11, to the third apparatus 40 in response to a user input for selecting the first information search object 111.

According to an embodiment, the electronic apparatus 10 may receive the object identifying command from the different electronic apparatus 20 through the third apparatus 40.

At operation ③, the electronic apparatus 10 may obtain a plurality of images.

According to an embodiment, the electronic apparatus 10 may obtain images that have been stored during a preset period of time with respect to a point in time when receiving the object identifying command transmitted from the different electronic apparatus 20. The electronic apparatus 10 may store some images among the images stored in a frame buffer to be displayed on the display 11. For example, the electronic apparatus 10 may store 10 sheets of images per second. The preset period of time may, for example, be 5 to 20 seconds.

For example, the electronic apparatus 10 may obtain some images among the images that have been stored in the frame buffer up to 10 seconds ago together with the image being displayed on the display 11 at the point in time when the object identifying command is received. In this case, the electronic apparatus 10 may obtain about 100 sheets of images including the image displayed on the display 11. However, the number of images stored in the electronic apparatus 10 per second is not limited to this example, and may be varied depending on the performance or the like of the electronic apparatus 10.

At operation ④, the electronic apparatus 10 may detect and identify (or recognize) objects included in the plurality of obtained images, thereby obtaining at least one candidate image.

The candidate image may, for example, refer to an image provided to a user so that the user can make sure whether a target for a search request is correct. Therefore, the candidate image may be an image which is sharper than a plurality of other images and shows an object more clearly.

According to an embodiment, the electronic apparatus 10 may select an image, in which an object is detectable, among a plurality of images. For example, the electronic apparatus 10 may detect edge components from the plurality of images, and select an image which includes more edge components than other images, or which has a higher edge component value than a set value.

According to an embodiment, the electronic apparatus 10 may perform detection of an object with regard to a plurality of selected images. For example, the electronic apparatus 10 can detect a human face, goods, a place, etc. based on a shape formed by the detected edge components. However, there are no limits to this example. For instance, the electronic apparatus 10 may detect an object from all the plurality of obtained images.

For example, the electronic apparatus 10 may detect a shape of a face from the plurality of images, in response to reception of a command that requests a search for a person included in media content.

According to an embodiment, the electronic apparatus 10 may identify an object based on feature points included in the detected object. For example, the electronic apparatus 10 may identify an object based on a data recognition model learned using a plurality of images with regard to a human face, goods, a place, etc.

According to an alternative embodiment, the data recognition model may include data recognition models learned according to objects desired to be detected, or may include one data recognition model.

The electronic apparatus 10 may use the identified object to obtain at least one candidate image provided to a user among the plurality of images.

For example, the electronic apparatus 10 may identify a face contained in a plurality of images selected by a face recognition algorithm (or a face recognition data recognition model) in response to reception of a command that requests identification of a person included in media content. The electronic apparatus 10 may, for example, obtain an image, which contains an actor based on an identified face, among a plurality of images as the candidate image.

According to an alternative embodiment, when a search is targeted for a person, the electronic apparatus 10 may obtain an image, which contains a full face among detected faces, among a plurality of images as the candidate image. Alternatively, the electronic apparatus 10 may obtain an image, which contains a face having the biggest size from faces contained in other images, among the plurality of images as the candidate image.

The electronic apparatus 10 may group persons, who are identified as the same person among persons detected in the plurality of images, into one-person group. With this, the electronic apparatus 10 can obtain a plurality of person groups such as a first person group, a second person group, etc.

The electronic apparatus 10 may obtain the candidate image based on an image, which contains relatively many edge components, a full face, or a bigger face than faces contained in other images, among the plurality of images included in each of the first person group and the second person group. Thus, the electronic apparatus 10 can obtain the candidate image for the first person group, and the candidate image for the second person group.

According to an alternative embodiment, the electronic apparatus 10 may obtain a candidate image based on information about media content being reproduced on the display 11, when the candidate image is not obtained among the plurality of images. For example, the electronic apparatus 10 may obtain person information, goods information or place information based on electronic program guide (EPG) data of media content, and obtain the candidate image based on the obtained information.

At operation ⑤, the electronic apparatus 10 may transmit at least one candidate image to the third apparatus 40.

According to an embodiment, the electronic apparatus 10 may transmit a candidate image, which contains a face of an actor included in the media content being displayed on the display 11, to the third apparatus 40.

According to an embodiment, the different electronic apparatus 20 may receive the candidate image from the electronic apparatus 10 through the third apparatus 40.

At operation ⑥, the different electronic apparatus 20 may display the received candidate image on a display 21.

According to an embodiment, when the different electronic apparatus 20 receives a plurality of candidate images, the different electronic apparatus 20 may display the candidate images through the user interface so that a user can check the candidate images in sequence.

At operation ⑦, the different electronic apparatus 20 may transmit the candidate image and the information search command to request the search for the information relevant to the candidate image to the third apparatus 40 in response to a user input that makes a request for proceeding to search for information about the candidate image. According to an alternative embodiment, the different electronic apparatus 20 may transmit the name of the identified object to the third apparatus 40.

For example, the different electronic apparatus 20 may transmit a candidate image that contains a face of an actor and a command that requests proceeding to search for the candidate image to the third apparatus 40. Further, the different electronic apparatus 20 may additionally or selectively transmit the name of the identified actor to the third apparatus 40.

According to an embodiment, the server 30 may receive the candidate image and the command that requests a search for information relevant to the candidate image transmitted from the different electronic apparatus 20 through the third apparatus 40. Alternatively, the server 30 may additionally receive the name of the actor.

At operation ⑧, the server 30 may retrieve relevant information based on the received information search command and the image, or the name of the object.

According to an embodiment, the server 30 may be based on information collected online or offline. For example, the server 30 may be newly structuralized to search for information and persons relevant to media content by collecting published data like Wiki data, etc. The server 30 may additionally collect information, which is missed in a step of structuralizing the collected data, online by web crawling or the like method, and store the collected information according to structures.

According to an embodiment, the server 30 may operate the collected data through elastic search, relational database (RDB) and the like base technique. Alternatively, the server 30 may provide relevant information based on a relationship between pieces of data by making a graph of data like Neo4j.

According to an embodiment, the server 30 may receive results through a promised application programming interface (API) such as YouTube™ or the like media content service provider; Facebook™, Twitter™ or the like social network services (SNS) service provider; or online shopping company; etc.

According to an embodiment, the server 30 may retrieve content relevant information from a storage space in which collected data is structuralized, and provide detailed information about the identified object. Further, the server 30 may provide link information for providing appended services such as links to a similar media content play, social media, a market for purchasing goods, etc.

According to an embodiment, the server 30 may search for various pieces of information as described above in connection with the actor.

At operation ⑨, the server 30 may transmit a search result to the third apparatus 40.

According to an embodiment, the server 30 may transmit found relevant information related to the actor to the third apparatus 40.

According to an embodiment, the different electronic apparatus 20 may receive the relevant information related to the actor from the server 30 through the third apparatus 40.

At operation ⑩, the different electronic apparatus 20 may display the received media content relevant information on the display 21.

According to an embodiment, the different electronic apparatus 20 may display the received information on the display 21 or output the received information together with a sound result through a loudspeaker.

The different electronic apparatus 20 may display a similar media content play link, and a social media or appended service providing link which are received together with the media content relevant information. With this, a user may access an online market to purchase goods.

According to an embodiment, the different electronic apparatus 20 may store relevant information as a user's use history of the different electronic apparatus 20. For example, the different electronic apparatus 20 may update the relevant information, and use the relevant information as data for analyzing user preference.

According to an embodiment, the different electronic apparatus 20 may display the relevant information related to the actor, for which a search is requested by a user, store the relevant information as the user's use history, and provide the relevant information to the user when update information related to the actor is received.

Like this, the relevant information recommendation system 1 may use the plurality of electronic apparatuses 10 and 20 so that one electronic apparatus can provide media content and another electronic apparatus can provide relevant information in connection with the media content.

Thus, a user can check the relevant information while fully watching the media content. Further, a user may check a search result, which has been obtained while watching the media content, at once after completely watching the media content.

However, there are no limits to this. The relevant information recommendation system 1 may be achieved by only one electronic apparatus. For example, the electronic apparatus 10 may display an information search user interface to search for media content relevant information, and display a search result.

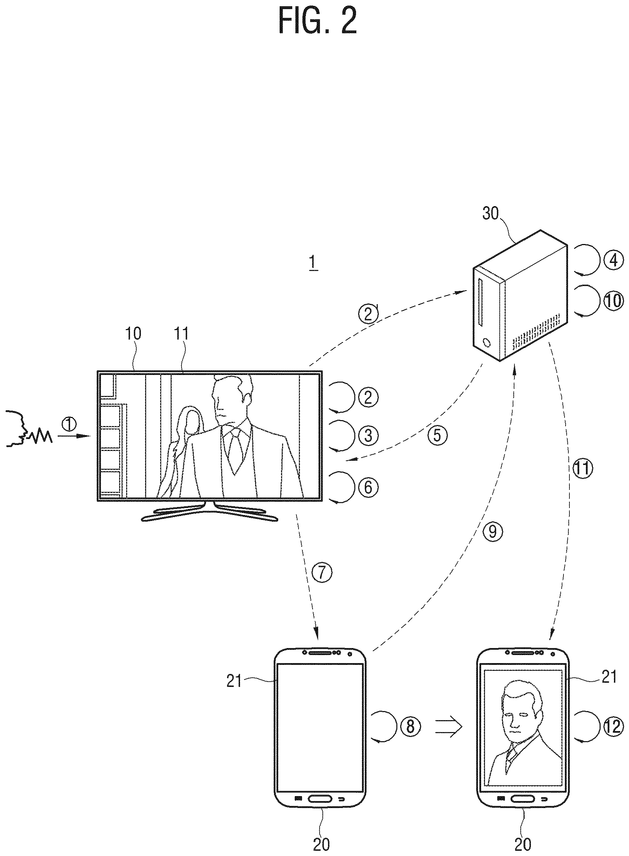

FIG. 2 illustrates a situation that an electronic apparatus receives a user's speech and recommends information relevant to media content reproduced in the electronic apparatus in a system for recommending relevant information according to an alternative embodiment.

Referring to FIG. 2, the relevant information recommendation system 1 may include the electronic apparatus 10, the different electronic apparatus 20, or the server 30. However, the elements of the relevant information recommendation system 1 are not limited to above elements, and an additional element needed for operation of the relevant information recommendation system 1 may be included, or some among the foregoing elements may be excluded.

The electronic apparatus 10, the different electronic apparatus 20, and the server 30 may perform communication using a communicator included therein.

According to an embodiment, the server 30 may receive a user's voice input from the electronic apparatus 10 and the different electronic apparatus 20 or other apparatuses (for example, an artificial intelligence loudspeaker, etc.) connected through a communication network and convert the voice input into text data. According to an alternative embodiment, the server 30 may generate (or select) a command to execute at least one function based on the text data. The command may include information about an operation (or a process) to execute at least one function or information about a parameter to execute the operation. The command may include a sequence of operations for executing at least one function. The electronic apparatus 10 or the different electronic apparatus 20 may receive the command generated by the server 30, select an app (or a function) based on the command, and execute the operation based on the command in the selected app.

Below, a method of using the relevant information recommendation system 1 will be described according to an alternative embodiment.

At operation ①, the electronic apparatus 10 may receive a user's input (for example, a speech) that requests relevant information related to media content being reproduced. For example, the electronic apparatus 10 may use a microphone (not shown) to receive a user's speech.

A user's input related to the media content may, for example, include one of "Who is that?", "What brand is that bag?" or "Where is that?". However, a user's input is not limited to this example, but may include a speech that request various pieces of relevant information related to the media content.

At operation ②, the electronic apparatus 10 may obtain a plurality of images in response to reception of a speech.

According to an embodiment, the electronic apparatus 10 may obtain images that have been stored during a preset period of time with respect to a point in time when the speech is received. The electronic apparatus 10 may store some images among the images stored in a frame buffer to be displayed on the display 11. For example, the electronic apparatus 10 may store 10 sheets of images per second. The preset period of time may, for example, be 5 to 20 seconds.

For example, the electronic apparatus 10 may obtain images that have been stored in the frame buffer up to 5 seconds ago together with the image being displayed on the display 11 at the point in time when the speech is received. In this case, the electronic apparatus 10 may obtain about 50 sheets of images including the image displayed on the display 11.

At operation ②', the electronic apparatus 10 may transmit the received speech to the server 30. The operation ② and the operation ②' may be carried out at the same time or in sequence.

At operation ③, the electronic apparatus 10 may detect and identify objects included in the plurality of images in set order.

According to an embodiment, the electronic apparatus 10 may select an image, in which an object is detectable, among a plurality of images. For example, the electronic apparatus 10 may detect edge components from the plurality of images, and select an image which includes more edge components than other images, or which has a higher edge component value.

According to an embodiment, the electronic apparatus 10 may perform detection of an object with regard to a plurality of selected images. For example, the electronic apparatus 10 can detect a human face, goods, a place, etc. based on a shape formed by the detected edge components.

According to an embodiment, the electronic apparatus 10 may identify an object based on feature points included in the detected object. For example, the electronic apparatus 10 may identify an object based on a data recognition model learned using a plurality of images with regard to a human face, goods, a place, etc.

According to an embodiment, the electronic apparatus 10 may detect and identify the face, the goods, or the place in sequence when a speech is received. The electronic apparatus 10 performs an operation of detecting and identifying the objects in set order at the same time when the speech is received, thereby reducing time taken in waiting speech content received from the server 30.

At operation ④, the server 30 may identify the speech content.

At operation ⑤, the server 30 may identify the speech content, generate or select a command to execute at least one function based on the identified speech content, and transmit the command to the electronic apparatus 10.

For example, the server 30 may identify speech content of "Who is that?", and generate and transmit the object identifying command that requests the electronic apparatus 10 to detect and identify persons from the plurality of obtained images.

At operation ⑥, the electronic apparatus 10 may obtain at least one candidate image.

According to an embodiment, the electronic apparatus 10 may detect and identify an object from the plurality of images based on the received object identifying command, thereby obtaining at least one candidate image.

For example, the electronic apparatus 10 may detect and identify objects in order of the face, the goods, or the place from a point in time when the speech is received. The electronic apparatus 10 may obtain an image including a previously detected and identified person as the candidate image, in response to reception of the command that requests the detection and identification of the person.

Alternatively, for example, the electronic apparatus 10 may stop the operation of detecting or identifying the person or goods in response to reception of the command to request the detection and identification of a place, perform an operation to detect and identify the place included in the plurality of images, and obtain the image including the detected and identified place as the candidate image.

At operation ⑦, the electronic apparatus 10 may transmit the candidate image to the different electronic apparatus 20.

At operation ⑧, the different electronic apparatus 20 may display the received candidate image on a display 21.

According to an embodiment, when the different electronic apparatus 20 receives a plurality of candidate images, the different electronic apparatus 20 may display the candidate images through the user interface so that a user can check the candidate images in sequence.

At operation ⑨, the different electronic apparatus 20 may transmit the candidate image and the information search command to the server 30 in response to a user input that makes a request for proceeding to search for information about the candidate image. According to an alternative embodiment, the different electronic apparatus 20 may transmit the name of the identified object to the server 30.

For example, the different electronic apparatus 20 may transmit a candidate image that contains a face of an actor and a command to search for the candidate image to the server 30. Further, the different electronic apparatus 20 may additionally or selectively transmit the name of the identified actor to the server 30.

At operation ⑩, the server 30 may retrieve relevant information based on the received information search command and the image, or the name of the object.

For example, the server 30 may retrieve the relevant information related to the actor.

At operation ⑪, the server 30 may transmit a search result to the different electronic apparatus 20.

For example, the server 30 may transmit found relevant information related to the actor to the different electronic apparatus 20.

At operation ⑫, the different electronic apparatus 20 may display the received media content relevant information on the display 21.

According to an embodiment, the different electronic apparatus 20 may display the received information on the display 21 or output the received information together with a sound result through a loudspeaker.

Like this, the relevant information recommendation system 1 may identify a user's speech and provide relevant information related to media content. Further, the relevant information recommendation system 1 may perform an operation of obtaining an image for an operation of searching for the relevant information at the same time when the speech is received, thereby more rapidly providing the search result to the user.

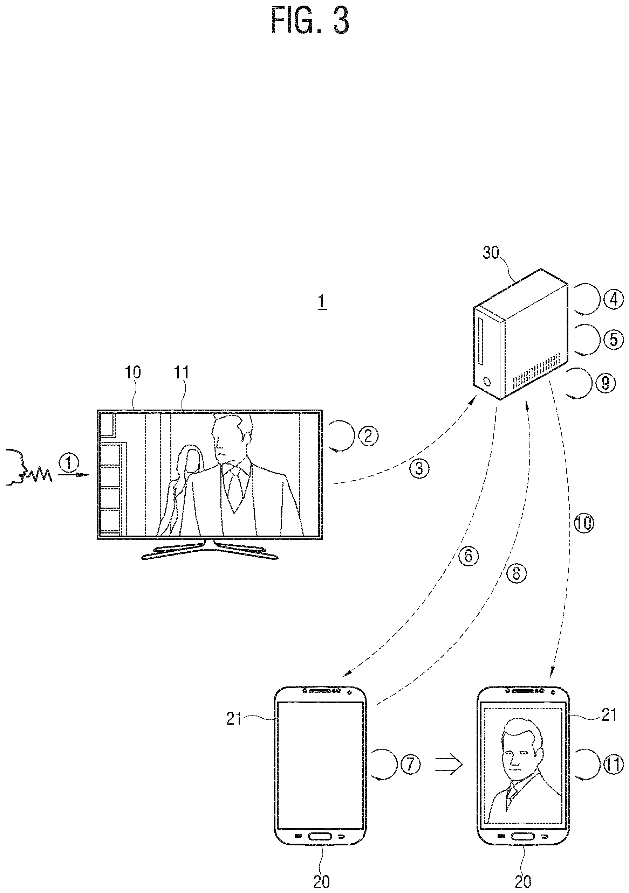

FIG. 3 illustrates a situation that a server identifies an object included in an image and recommends information relevant to media content reproduced in the electronic apparatus in a system for recommending relevant information according to an alternative embodiment.

Referring to FIG. 3, the relevant information recommendation system 1 may include the electronic apparatus 10, the different electronic apparatus 20, or the server 30. However, the elements of the relevant information recommendation system 1 are not limited to above elements, and an additional element needed for operation of the relevant information recommendation system 1 may be included, or some among the foregoing elements may be excluded.

The electronic apparatus 10, the different electronic apparatus 20, and the server 30 may perform communication using a communicator included therein.

Below, a method of using the relevant information recommendation system 1 will be described according to an alternative embodiment.

At operation ①, the electronic apparatus 10 may receive a user's input (for example, a speech) that requests relevant information related to media content being reproduced. For example, the electronic apparatus 10 may use a microphone (not shown) to receive a user's speech.

A user's input related to the media content may, for example, include one of "Who is that?", "What brand is that bag?" or "Where is that?". However, a user's input is not limited to this example, but may include a speech that request various pieces of relevant information related to the media content.

At operation ②, the electronic apparatus 10 may obtain a plurality of images in response to reception of a speech.

According to an embodiment, the electronic apparatus 10 may obtain images that have been stored during a preset period of time with respect to a point in time when the speech is received. The electronic apparatus 10 may store some images among the images stored in a frame buffer to be displayed on the display 11. For example, the electronic apparatus 10 may store 10 sheets of images per second. The preset period of time may, for example, be 5 to 20 seconds.

For example, the electronic apparatus 10 may obtain images that have been stored up to 5 seconds ago together with the image being displayed on the display 11 at the point in time when the speech is received. In this case, the electronic apparatus 10 may obtain about 50 sheets of images including the image displayed on the display 11.

At operation ③, the electronic apparatus 10 may transmit the received speech and the plurality of obtained images to the server 30. According to an alternative embodiment, the electronic apparatus 10 may first transmit the received speech to the server 30, and then transmit the plurality of obtained images to the server 30.

At operation ④, the server 30 may identify speech content.

At operation ⑤, the server 30 may generate the object identifying command to detect and identify the objects contained in the plurality of images based on the speech content. Further, the server 30 may obtain the candidate image based on the identified results.

According to an embodiment, the server 30 may select an image, in which an object is detectable, among a plurality of images. For example, the server 30 may detect edge components from the plurality of images, and select an image which includes more edge components than other images, or which has a higher edge component value.

According to an embodiment, the server 30 may perform detection of an object with regard to a plurality of selected images. For example, the server 30 can detect a human face, goods, a place, etc. based on a shape formed by the detected edge components.

According to an embodiment, the server 30 may identify an object based on feature points included in the detected object. For example, the server 30 may identify an object based on a data recognition model learned using a plurality of images with regard to a human face, goods, a place, etc.

For example, the server 30 may identify speech content of "Who is that?", and detect and identify a shape of a person from the plurality of images.

According to an embodiment, the server 30 may use the identified object to obtain at least one candidate image to be provided to a user among the plurality of images.

For example, the server 30 may use the identified face to obtain an image, which contains the actor, among the plurality of images as the candidate image.

At operation ⑥, the server 30 may transmit at least one candidate image to the different electronic apparatus 20.

At operation ⑦, the different electronic apparatus 20 may display the received candidate image on a display 21.

According to an embodiment, when the different electronic apparatus 20 receives a plurality of candidate images, the different electronic apparatus 20 may display the candidate images through the user interface so that a user can check the candidate images in sequence.

At operation ⑧, the different electronic apparatus 20 may transmit the candidate image and the information search command to the server 30 in response to a user input that makes a request for proceeding to search for information about the candidate image. According to an alternative embodiment, the different electronic apparatus 20 may transmit the name of the identified object to the server 30.

For example, the different electronic apparatus 20 may transmit a candidate image that contains a face of an actor and a command to search for the candidate image to the server 30. Further, the different electronic apparatus 20 may additionally or selectively transmit the name of the identified actor to the server 30.

At operation ⑨, the server 30 may retrieve relevant information based on the received information search command and the image, or the name of the object.

For example, the server 30 may retrieve the relevant information related to the actor.

At operation ⑩, the server 30 may transmit a search result to the different electronic apparatus 20.

For example, the server 30 may transmit found relevant information related to the actor to the different electronic apparatus 20.

At operation ⑪, the different electronic apparatus 20 may display the received media content relevant information on the display 21.

According to an embodiment, the different electronic apparatus 20 may display the received information on the display 21 or output the received information together with a sound result through a loudspeaker.

Like this, the relevant information recommendation system 1 may identify a user's speech and provide relevant information related to media content. Further, the relevant information recommendation system 1 may use an object identification algorithm or the like of the server 30 to identify the object in the image provided by the electronic apparatus 10. Thus, the relevant information recommendation system 1 can provide a service regardless of the hardware or software performance of the electronic apparatus 10.

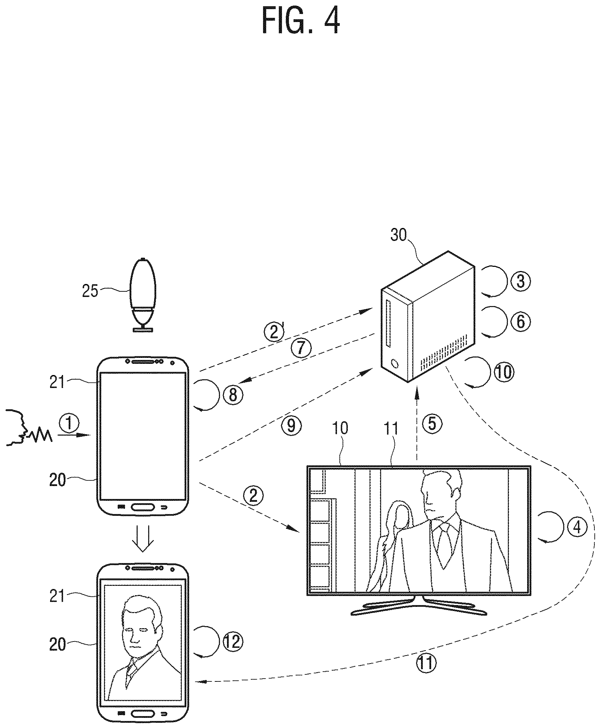

FIG. 4 illustrates a situation that information relevant to media content reproduced in the electronic apparatus is recommended as another electronic apparatus receives a speech in a system for recommending relevant information according to an alternative embodiment.

Referring to FIG. 4, the relevant information recommendation system 1 may include the electronic apparatus 10, the different electronic apparatus 20, or the server 30. However, the elements of the relevant information recommendation system 1 are not limited to above elements, and an additional element needed for operation of the relevant information recommendation system 1 may be included, or some among the foregoing elements may be excluded.

The electronic apparatus 10, the different electronic apparatus 20, and the server 30 may perform communication using a communicator included therein.

Below, a method of using the relevant information recommendation system 1 will be described according to an alternative embodiment.

At operation ①, the different electronic apparatus 20 may receive a user's input (for example, a speech) that requests relevant information related to media content being reproduced. For example, the different electronic apparatus 20 may use a microphone (not shown) to receive a user's speech.

A user's input related to the media content may, for example, include one of "Who is that?", "What brand is that bag?" or "Where is that?". However, a user's input is not limited to this example, but may include a speech that request various pieces of relevant information related to the media content.

According to an alternative embodiment, the relevant information recommendation system 1 may further include an artificial intelligence loudspeaker 25. In this case, the artificial intelligence loudspeaker 25 may receive a user's speech.

At operation ②, the different electronic apparatus 20 or the artificial intelligence loudspeaker 25 may transmit a command, which requests an image of content being currently reproduced to be stored and transmitted to the server 30 in response to the reception of the speech, to the electronic apparatus 10.

At operation ②', the electronic apparatus 10 or the artificial intelligence loudspeaker 25 may transmit the received speech to the server 30. The operation ② and the operation ②' may be carried out at the same time or in sequence.

At operation ③, the server 30 may identify speech content. For example, the server 30 may identify speech content of "Who is that?", and generate an object identifying command that requests the electronic apparatus 10 to detect and identify persons from the plurality of images received from the electronic apparatus 10.

At operation ④, the electronic apparatus 10 may obtain the plurality of images in response to the command that requests an image of content being currently reproduced to be stored and transmitted to the server 30.

According to an embodiment, the electronic apparatus 10 may obtain images that have been stored during a preset period of time with respect to a point in time when the speech is received. The electronic apparatus 10 may store some images among the images stored in a frame buffer to be displayed on the display 11. For example, the electronic apparatus 10 may store 10 sheets of images per second. The preset period of time may, for example, be 5 to 20 seconds.

For example, the electronic apparatus 10 may obtain images that have been stored up to 5 seconds ago together with the image being displayed on the display 11 at the point in time when the speech is received. In this case, the electronic apparatus 10 may obtain about 50 sheets of images including the image displayed on the display 11.

At operation ⑤, the electronic apparatus 10 may transmit the plurality of obtained images to the server 30.

At operation ⑥, the server 30 may detect and identify an object included in the plurality of images based on the speech content, and obtain the candidate image.

According to an embodiment, the server 30 may select an image, in which an object is detectable, among a plurality of images. For example, the server 30 may detect edge components from the plurality of images, and select an image which includes more edge components than other images, or which has a higher edge component value.

According to an embodiment, the server 30 may perform detection of an object with regard to a plurality of selected images. For example, the server 30 can detect a human face, goods, a place, etc. based on a shape formed by the detected edge components.

According to an embodiment, the server 30 may identify an object based on feature points included in the detected object. For example, the server 30 may identify an object based on a data recognition model learned using a plurality of images with regard to a human face, goods, a place, etc.

For example, the server 30 may identify speech content of "Who is that?", and detect and identify a shape of a person from the plurality of images.

According to an embodiment, the server 30 may use the identified object to obtain at least one candidate image to be provided to a user among the plurality of images.

For example, the server 30 may use the identified face to obtain an image, which contains the actor, among the plurality of images as the candidate image.

At operation ⑦, the server 30 may transmit at least one candidate image to the different electronic apparatus 20.

At operation ⑧, the different electronic apparatus 20 may display the received candidate image on a display 21.

According to an embodiment, when the different electronic apparatus 20 receives a plurality of candidate images, the different electronic apparatus 20 may display the candidate images through the user interface so that a user can check the candidate images in sequence.

At operation ⑨, the different electronic apparatus 20 may transmit the candidate image and the information search command to the server 30 in response to a user input that makes a request for proceeding to search for information about the candidate image. According to an alternative embodiment, the different electronic apparatus 20 may transmit the name of the identified object to the server 30.

For example, the different electronic apparatus 20 may transmit a candidate image that contains a face of an actor and a command to search for the candidate image to the server 30. Further, the different electronic apparatus 20 may additionally or selectively transmit the name of the identified actor to the server 30.

At operation ⑩, the server 30 may retrieve relevant information based on the received information search command and the image, or the name of the object.

For example, the server 30 may retrieve the relevant information related to the actor.

At operation ⑪, the server 30 may transmit a search result to the different electronic apparatus 20.

For example, the server 30 may transmit found relevant information related to the actor to the different electronic apparatus 20.

At operation ⑫, the different electronic apparatus 20 may display the received media content relevant information on the display 21.

According to an embodiment, the different electronic apparatus 20 may display the received information on the display 21 or output the received information together with a sound result through a loudspeaker.

Like this, the relevant information recommendation system 1 may identify a user's speech and provide relevant information related to media content. Further, the relevant information recommendation system 1 may provide a service to a user through the artificial intelligence loudspeaker 25 or the different electronic apparatus 20 capable of receiving a speech.

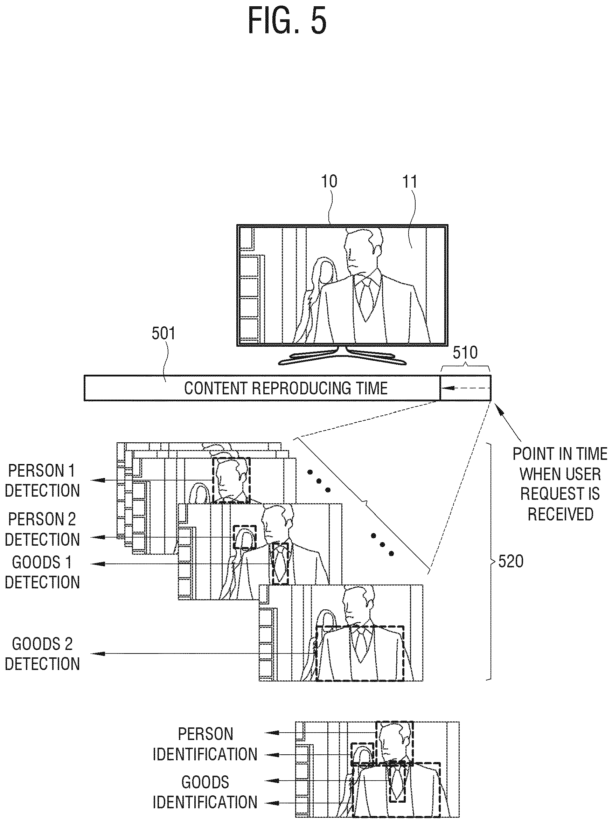

FIG. 5 illustrates situations that an electronic apparatus according to an embodiment obtains a plurality of images.

Referring to (a) in FIG. 5, the electronic apparatus 10 may reproduce media content for a certain content reproducing time 501. One piece of media content may include a plurality of images. For example, the electronic apparatus 10 may displays about 60 sheets of images per second on the display 11 based on the plurality of images included in the media content.

According to an embodiment, the electronic apparatus 10 may store the images that have been displayed on the display for 5 to 20 seconds. The electronic apparatus 10 may store some images among the images stored in the frame buffer to be displayed on the display 11. For example, an operation of storing about 10 sheets of images per second may be performed by the electronic apparatus 10 during the foregoing time of 5 to 20 seconds. Further, when a preset period of time passes, the electronic apparatus 10 may delete the plurality of stored images. In other words, the electronic apparatus 10 repeats storing the plurality of images for a preset period of time, deleting the plurality of stored images when the preset period of time passes, and storing a plurality of images again for the preset period of time.

According to an embodiment, the electronic apparatus 10 may obtain images 520 stored for a preset period of time 510 with respect to a point in time when a request for searching for an object is received or when a request is received corresponding to a speech or the like. For example, the electronic apparatus 10 may obtain images that have been stored up to 5 seconds ago together with the image including the object being displayed on the display 11 at the point in time when the speech is received. In this case, the electronic apparatus 10 may obtain about 50 sheets of images together with the image being displayed on the display 11.

According to an embodiment, the electronic apparatus 10 may detect an object with respect to the plurality of obtained images 520, based on the object for which a search is requested by speech content or a user, identify the object, and obtain at least one candidate image.

According to an embodiment, the electronic apparatus 10 may select an image, from which the object is detectable, among the plurality of images 520. For example, the electronic apparatus 10 may detect an edge component included in the plurality of images 520, and select an image which contains more edge components or has a higher edge component value than other images.

According to an embodiment, the electronic apparatus 10 may perform the detection of the object with regard to the plurality of selected images. For example, the electronic apparatus 10 may detect a human face, goods, a place, etc. based on a shape formed by the detected edge components.

According to an embodiment, the electronic apparatus 10 may identify an object based on feature points included in the detected object. For example, the electronic apparatus 10 may identify an object based on a data recognition model learned using a plurality of images with regard to a human face, goods, a place, etc.

According to an alternative embodiment, the data recognition model may include data recognition models learned according to objects desired to be detected, or may include one data recognition model.

The electronic apparatus 10 may use the identified object to obtain at least one candidate image provided to a user among the plurality of images 520.

According to an alternative embodiment, the foregoing operation in FIG. 5 may be performed by the server 30 as described above with reference to FIG. 3 or FIG. 4.

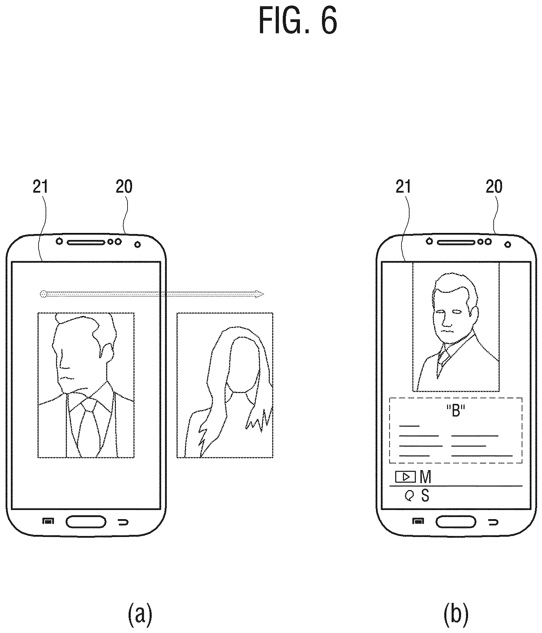

FIG. 6 illustrates situations that another electronic apparatus displays a candidate image and displays a search result on an object included in the candidate image in a system for recommending relevant information according to an embodiment.

Referring to (a) in FIG. 6, the different electronic apparatus 20 may display at least one candidate image on the display 21.

According to an embodiment, when a plurality of candidate images are received, the different electronic apparatus 20 may display the candidate images through a user interface that can be checked by a user in sequence.

For example, a user may check the plurality of candidate images by making a touch and slide input in left and right directions or up and down directions on the display 21.

However, a method by which a user controls the different electronic apparatus 20 is not limited to this example. For instance, the different electronic apparatus 20 may display the plurality of candidate images one by one on the display 21 in response to a user's speech. Alternatively, the different electronic apparatus 20 may display the plurality of candidate images one by one on the display 21 in response to a user's physical key input.

According to an embodiment, the different electronic apparatus 20 may display a result of searching for information relevant to the candidate image on the display 21 in response to a user's input of selecting the candidate image.

For example, when a user's input of selecting the candidate image is received, the different electronic apparatus 20 may transmit a search command for the selected candidate image command to the server 30. According to an alternative embodiment, the different electronic apparatus 20 may additionally or selectively transmit the name of the identified object to the server 30. Alternatively, the different electronic apparatus 20 may transmit information, which is needed for the server 30 to perform a search, such as the candidate image, the name of the object included in the candidate image, etc. according to previously promised forms, to the server 30.

Referring to (b) in FIG. 6, the different electronic apparatus 20 may display search results received from the server 30 on the display 21.

According to an embodiment, the different electronic apparatus 20 may display the received information on the display 21 or output the received information together with a sound result through a loudspeaker.

According to an alternative embodiment, the different electronic apparatus 20 may display a similar media content play link, and a social media or appended service providing link which are received together with the relevant information. With this, a user may have an access to an online market to purchase goods.

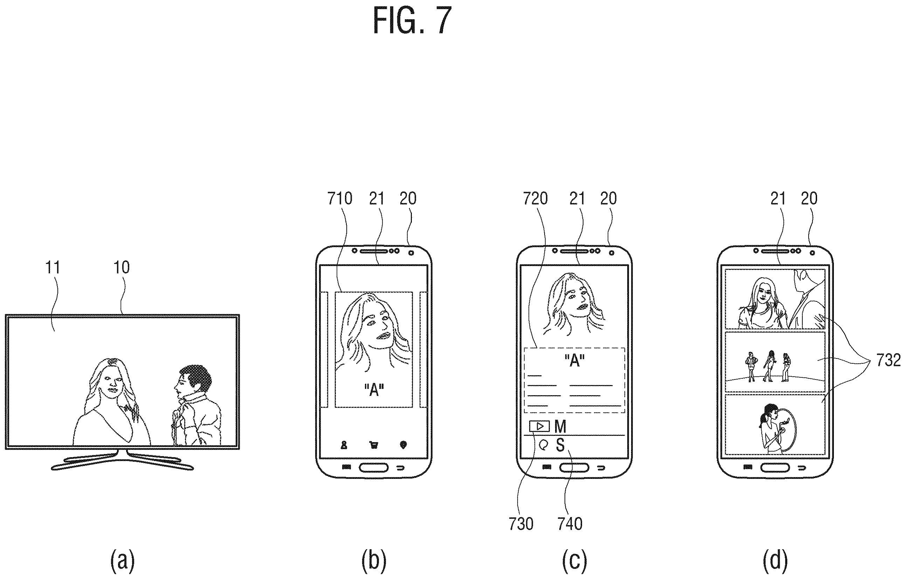

FIG. 7 illustrates situations that another electronic apparatus displays a search result on a person in a system for recommending relevant information according to an embodiment.

Referring to (a) in FIG. 7, the electronic apparatus 10 may display media content on the display 11. While displaying the media content on the display 21, the electronic apparatus 10 may obtain a plurality of images in response to reception of a speech or a search command. For example, the electronic apparatus 10 may obtain a plurality of images when a speech of "Who is that person?" or a search command for selecting a first information search object (e.g.: the first information search object 111 of FIG. 1) to search for a person is received.

According to an embodiment, the electronic apparatus 10 may obtain images that have been stored during a preset period of time with respect to a point in time when the speech is received. According to an embodiment, the electronic apparatus 10 may store 10 sheets of images per second. The preset period of time may, for example, be 5 to 20 seconds.

Referring to (b) in FIG. 7, the different electronic apparatus 20 according to an embodiment may display a representative image 710 among search results on the display 21 after undergoing the foregoing processes shown in FIGS. 1 to 4.

According to an embodiment, the different electronic apparatus 20 may display a search result in addition to cumulative previously search results.

Referring to (c) in FIG. 7, the different electronic apparatus 20 may display detailed information about a person search result in response to a user's input for selecting a representative image 710. For example, the different electronic apparatus 20 may display a profile 720 of a found person, a site 730 of a media content service provider that provides video information related to the found person, or an SNS site 740 providing information related to the found person.

Referring to (d) in FIG. 7, the different electronic apparatus 20 may display detailed information in response to a user's input of selecting the site 730 of the media content service provider. The user may select and view one of provided video clips 732.

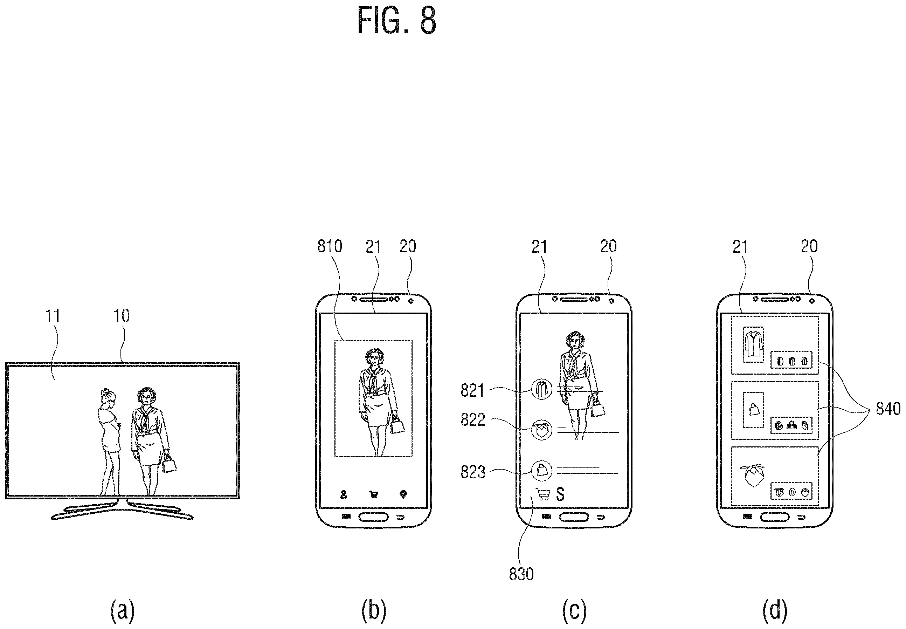

FIG. 8 illustrates situations that another electronic apparatus displays a search result on goods in a system for recommending relevant information according to an embodiment.

Referring to (a) in FIG. 8, the electronic apparatus 10 may display media content on the display 11. While displaying the media content on the display 11, the electronic apparatus 10 may obtain a plurality of images in response to reception of a speech or a search command. For example, the electronic apparatus 10 may obtain a plurality of images when a speech of "What brands are the clothing and bag that woman wears and carries?" or a search command for selecting a second information search object (e.g.: the second information search object 112 of FIG. 1) to search for goods is received.

Referring to (b) in FIG. 8, the different electronic apparatus 20 according to an embodiment may display a representative image 810 among search results on the display 21 after undergoing the foregoing processes shown in FIGS. 1 to 4.

According to an embodiment, the different electronic apparatus 20 may display a search result in addition to previously accumulated search results.

Referring to (c) in FIG. 8, the different electronic apparatus 20 may display detailed information about a goods search result in response to a user's input for selecting a representative image 810. For example, the different electronic apparatus 20 may display information 821 about a found coat, information 822 about a found muffler, or information 823 about a found bag on the display 21.

According to an embodiment, the different electronic apparatus 20 may display a purchasing site linking object 830 for connection with a site for purchasing the found goods on the display 21.

Referring to (d) in FIG. 8, the different electronic apparatus 20 may display sites 840, from which the goods are respectively purchasable, on the display 21 in response to a user's input of selecting the purchasing site linking object 830. A user can have an access to the site in which desired goods are selectable and purchasable.

According to an alternative embodiment, the different electronic apparatus 20 may display all the goods correctly identical to the found goods and the goods similar to the found goods.

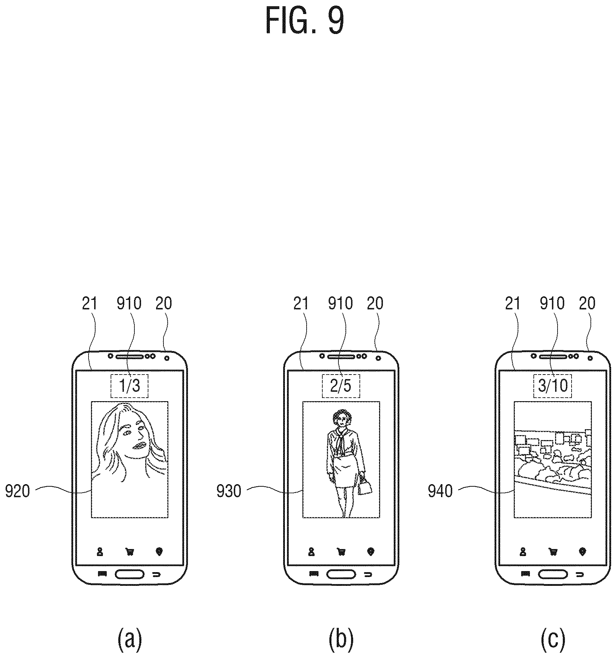

FIG. 9 illustrates situations that another electronic apparatus provides a search list in a system for recommending relevant information according to an embodiment.

Referring to FIG. 9, the different electronic apparatus 20 may cumulate and display search results on the display 21. For example, a user may execute a program (or an application program, software, etc.) related to the relevant information recommendation system to check a previous search history.

According to an embodiment, the different electronic apparatus 20 may display a guider 920, by which a currently displayed search result is numbered as compared with a total number of cumulative search results, on the display 21.

For example, referring to (a) in FIG. 9, the different electronic apparatus 20 may display a representative image 920 of a person-search result, which has been searched firstly, among a total of three person-search results. Alternatively, referring to (b) in FIG. 9, the different electronic apparatus 20 may display a representative image 930 of a goods-search result, which has been searched secondly, among a total of five goods-search results. Alternatively, referring to (c) in FIG. 9, the different electronic apparatus 20 may display a representative image 940 of a place-search result, which has been searched thirdly, among a total of ten place-search results.

According to an embodiment, a user may check the representative images by making a touch and slide input in left and right directions or up and down directions on the display 21.

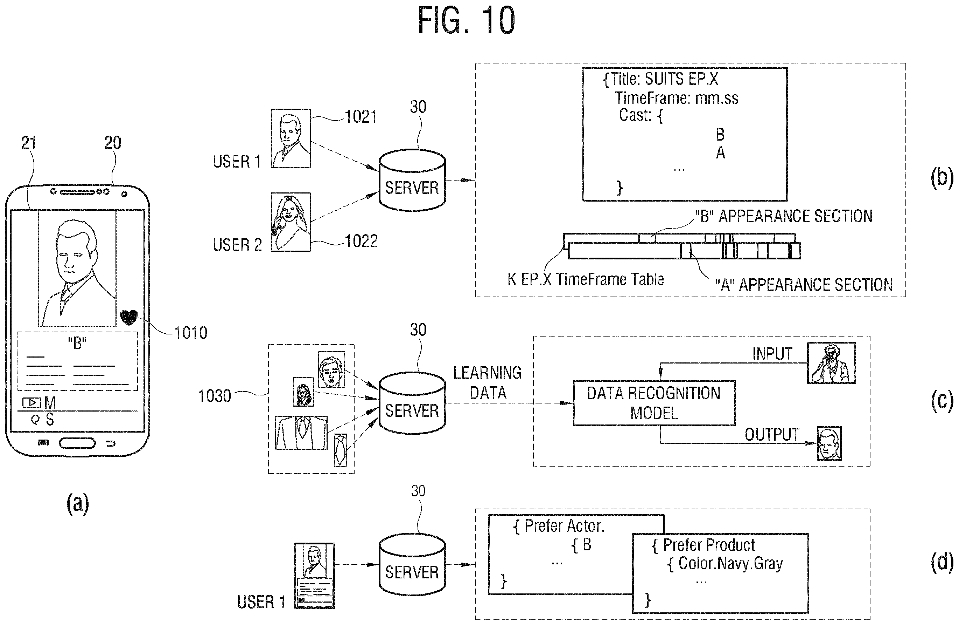

FIG. 10 illustrates situations that a user's feedback is utilized in a system for recommending relevant information according to an embodiment.

Referring to (a) in FIG. 10, the different electronic apparatus 20 may display a search result. A user may give feedback to the search result. For example, the electronic apparatus 10 may display a feedback object 1010, which is selectable with satisfaction of a search result, on the display 21 while displaying the search result.

Referring to (b) in FIG. 10, the relevant information recommendation system 1 may store a user's feedback as new data in the server 30.

According to an embodiment, a first user may give feedback of satisfaction to a search result of an actor in media content. A second user may give feedback to a search result of an actress in media content. The server 30 may collect feedback 1021 of the first user and feedback 1022 of the second user.

According to an embodiment, the server 30 may reflect a user's feedback in data where a plurality of images contained in the media content are arranged in time series. For example, the server 30 may add information about screen time of an actor in images at a point in time when the first user searches for the actor. Alternatively, the server 30 may add information about screen time of an actress in images at a point in time when the second user searches for the actress. With this, the server may cumulate information about appearance of a specific person in the media content.

Referring to (c) in FIG. 10, the relevant information recommendation system 1 may utilize a user's feedback as learning data for recognizing and identifying an object.

According to an embodiment, presence of a user's feedback may interrelate with the accuracy of the search results, and therefore the server 30 identifies that results of detecting and identifying an object in candidate images 1030 provided to the user have high accuracy, and uses the candidate images 1030 as learning data to thereby teach the data recognition model.

Referring to (d) in FIG. 10, the relevant information recommendation system 1 may utilize a user's feedback as data for identifying a user's preference.

According to an embodiment, the server 30 may store a person, to which a user has given feedback, as a person highly preferred by the user. When the user searches for the media content or the like in the future, the server 30 may preferentially provide the media content in which a person highly preferred by the user appears.

According to an alternative embodiment, the server 30 may store goods, to which a user has given feedback, as goods or color highly preferred by the user. When the user searches for goods in the future, the server 30 may preferentially provide goods having color highly preferred by the user.

According to an alternative embodiment, the server 30 may store a place, to which a user has given feedback, as a place highly preferred by the user. When the user searches for a place through a map app in the future, the server 30 may display the place to which the user's feedback has been given, and provide information to display information relevant to the place. Alternatively, when the user uses the map app near the place to which the user's feedback has been given, the server 30 may display the place to which the user has given the feedback and provide information to display the relevant information.

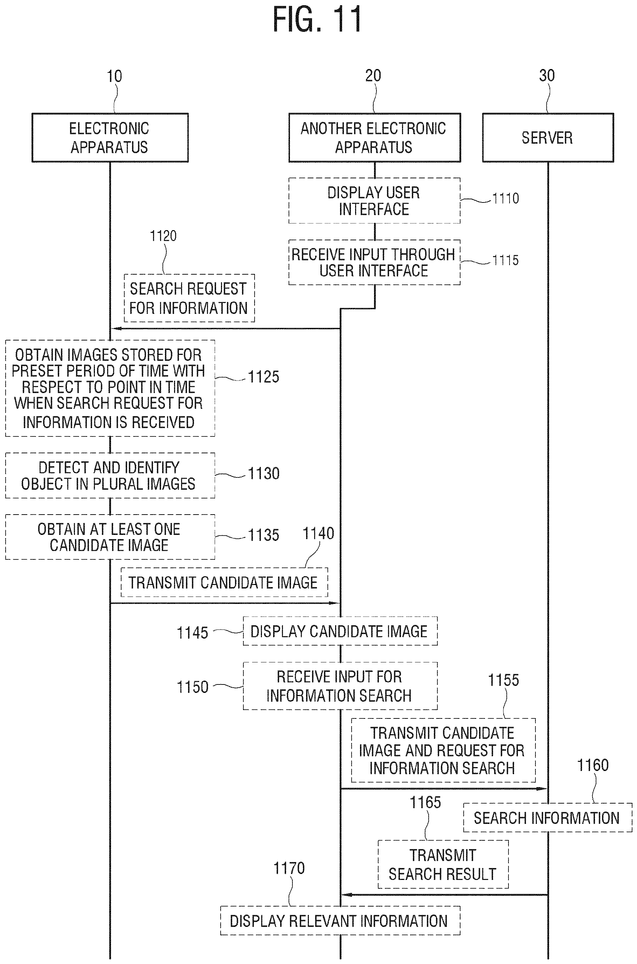

FIG. 11 is a flowchart showing a situation that information related to media content reproduced in an electronic apparatus is recommended through a user interface displayed on another electronic apparatus in a system for recommending information relevant to media content according to an embodiment.

At operation 1110, the different electronic apparatus 20 may display a user interface. The user interface may, for example, refer to a user interface of an information search program (or an application program) that guides an information search request for an object contained in media content being reproduced in the electronic apparatus 10.

At operation 1115, the different electronic apparatus 20 may receive an input through the user interface. For example, the user interface may include an information search object that requests a search for a preset object (for example, a person, goods, a place, etc.). A user may select one of the information search objects and issue a command to execute a search.

At operation 1120, the different electronic apparatus 20 may make a request for an information search to the electronic apparatus 10.

At operation 1125, the electronic apparatus 10 may obtain images which have been stored for a preset period of time with respect to a point in time when the information search request is received. According to an embodiment, the electronic apparatus may store about 10 images per second in a frame buffer. The electronic apparatus may, for example, obtain the images that have been stored for about 10 seconds.

At operation 1130, the electronic apparatus 10 may detect and identify (or recognize) an object included in a plurality of obtained images. For example, the electronic apparatus 10 may detect edge components included in the plurality of images, and select an image which contains more edge components or has a higher edge component value than other images. The electronic apparatus 10 may detect a human face, goods, a place, etc. based on a shape formed by the detected edge components.

According to an embodiment, the electronic apparatus 10 may identify an object based on feature points included in the detected object. For example, the electronic apparatus 10 may identify an object based on a data recognition model learned using a plurality of images with regard to a human face, goods, a place, etc.

At operation 1135, the electronic apparatus 10 may obtain at least one candidate image. For example, the electronic apparatus 10 may use the identified object to obtain at least one candidate image provided to a user among the plurality of images. The candidate image may, for example, refer to an image provided to a user so that the user can make sure whether a target for a search request is correct. Therefore, the candidate image may be an image which is sharper than a plurality of other images and shows an object more clearly.

For example, the electronic apparatus 10 may detect edge components from the plurality of images, and select an image which includes more edge components than other images, or which has a higher edge component value than a set value.

For example, when a search is targeted for a person, the electronic apparatus 10 may obtain an image, which contains a full face among detected faces, among a plurality of images as the candidate image. Alternatively, the electronic apparatus 10 may obtain an image, which contains a face having the biggest size from faces contained in other images, among the plurality of images as the candidate image.

At operation 1140, the electronic apparatus 10 may transmit the candidate image to the different electronic apparatus 20.

At operation 1145, the different electronic apparatus 20 may display the received candidate image. For example, when the different electronic apparatus 20 receives a plurality of candidate images, the different electronic apparatus 20 may display the candidate images through the user interface so that a user can check the candidate images in sequence.

At operation 1150, the different electronic apparatus 20 may receive a user input for checking the proceedings of the information search for the candidate image.

At operation 1155, the different electronic apparatus 20 may transmit the candidate image and the search request command to the server 30. The different electronic apparatus 20 may additionally or selectively transmit the name of the identified object to the server 30.

At operation 1160, the server 30 may search for information relevant to the candidate image.

At operation 1165, the server 30 may transmit a search result to the different electronic apparatus 20.

At operation 1170, the different electronic apparatus 20 may display the received relevant information. For example, the different electronic apparatus 20 may display the received information on the display 21 or output the received information together with a sound result through a loudspeaker.

The different electronic apparatus 20 may display a similar media content play link, and a social media or appended service providing link which are received together with the media content relevant information. With this, a user may access an online market to purchase goods.

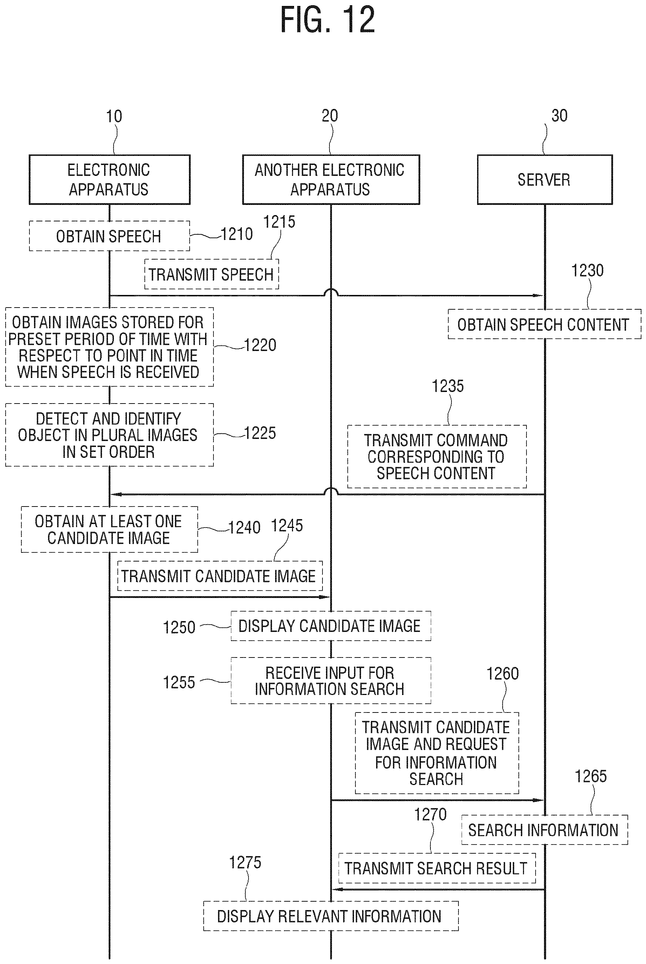

FIG. 12 is a flowchart showing a situation that an electronic apparatus receives a user's speech and recommends information relevant to media content reproduced in the electronic apparatus in a system for recommending relevant information according to an alternative embodiment.

At operation 1210, the electronic apparatus 10 may obtain a speech. For example, the electronic apparatus 10 may receive a user's speech that requests relevant information related to media content being reproduced.

At operation 1215, the electronic apparatus 10 may transmit the received speech to the server 30.

At operation 1220, the electronic apparatus 10 may obtain images which have been stored for a preset period of time with respect to a point in time when the speech is received.

According to an embodiment, the operation 1215 and the operation 1120 may be carried out at the same time, or the operation 1220 may be carried out before the operation 1215.

At operation 1225, the electronic apparatus 10 may detect and identify the objects included in the plurality of images in set order. According to an embodiment, the electronic apparatus 10 may detect and identify the objects in order of the face, the goods, or the place when a speech is received. The electronic apparatus 10 performs an operation of detecting and identifying the objects in set order at the same time when the speech is received, thereby reducing time taken in waiting speech content received from the server 30.

At operation 1230, the server 30 may obtain the speech content.

At operation 1235, the server 30 may transmit a command corresponding to the speech content to the electronic apparatus 10. For example, the server 30 may identify the speech content, and generate or select a command to execute at least one function based on the identified speech content, thereby transmitting the command to the electronic apparatus 10.

At operation 1240, the electronic apparatus 10 may obtain at least one candidate image. For example, the electronic apparatus 10 may detect and identify objects in order of the face, the goods, or the place from a point in time when the speech is received. The electronic apparatus 10 may obtain an image including a previously detected and identified person as the candidate image, in response to reception of the command that requests the detection and identification of the person.

Alternatively, for example, the electronic apparatus 10 may stop the operation of detecting or identifying the person or goods in response to reception of the command to request the detection and identification of a place, perform an operation to detect and identify the place included in the plurality of images, and obtain the image including the detected and identified place as the candidate image.

At operation 1245, the electronic apparatus 10 may transmit the candidate image to the different electronic apparatus 20.

At operation 1250, the different electronic apparatus 20 may display the received candidate image.

At operation 1255, the different electronic apparatus 20 may receive a user input for checking the proceedings of the information search for the candidate image.

At operation 1260, the different electronic apparatus 20 may transmit the candidate image and the search request command to the server 30.

At operation 1265, the server 30 may search for information relevant to the candidate image.

At operation 1270, the server 30 may transmit a search result to the different electronic apparatus 20.

At operation 1275, the different electronic apparatus 20 may display the received relevant information.

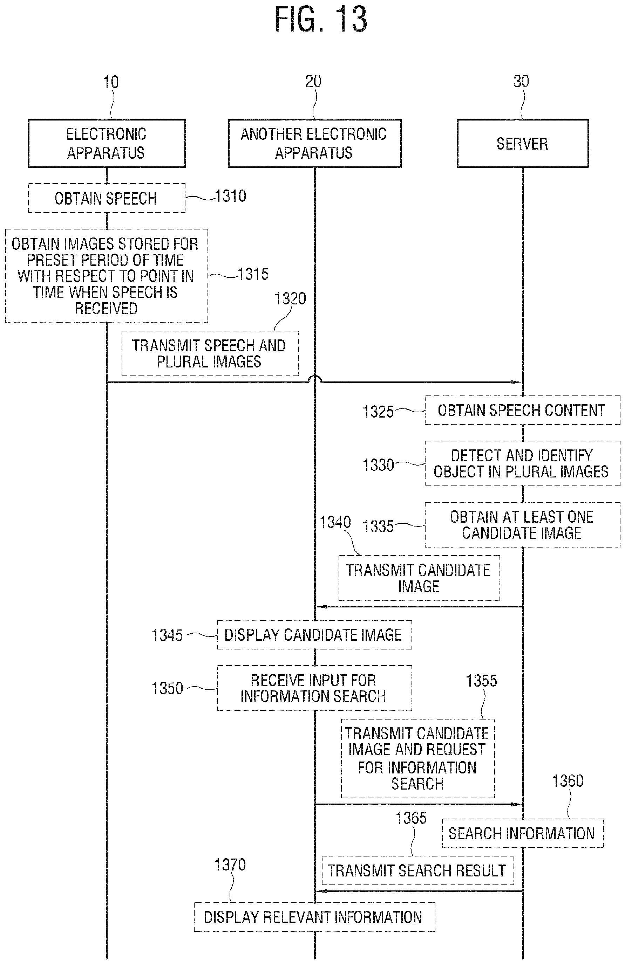

FIG. 13 is a flowchart showing a situation that a server identifies an object included in an image and recommends information relevant to media content reproduced in the electronic apparatus in a system for recommending relevant information according to an alternative embodiment.

At operation 1310, the electronic apparatus 10 may obtain a speech. For example, the electronic apparatus 10 may receive a user's speech that requests relevant information related to media content being reproduced.

At operation 1315, the electronic apparatus 10 may obtain images which have been stored for a preset period of time with respect to a point in time when the speech is received.

At operation 1320, the electronic apparatus 10 may transmit the received speech and the plurality of obtained images to the server 30.

At operation 1325, the server 30 may obtain the speech content.

At operation 1330, the server 30 may detect and identify objects included in the plurality of images based on the obtained speech content.

At operation 1335, the server 30 may obtain at least one candidate image.

At operation 1340, the server 30 may transmit the candidate image to the different electronic apparatus 20.

At operation 1345, the different electronic apparatus 20 may display the received candidate image.

At operation 1350, the different electronic apparatus 20 may receive a user input for checking the proceedings of the information search for the candidate image.

At operation 1355, the different electronic apparatus 20 may transmit the candidate image and the search request command to the server 30.

At operation 1360, the server 30 may search for information relevant to the candidate image.

At operation 1365, the server 30 may transmit a search result to the different electronic apparatus 20.

At operation 1370, the different electronic apparatus 20 may display the received relevant information.

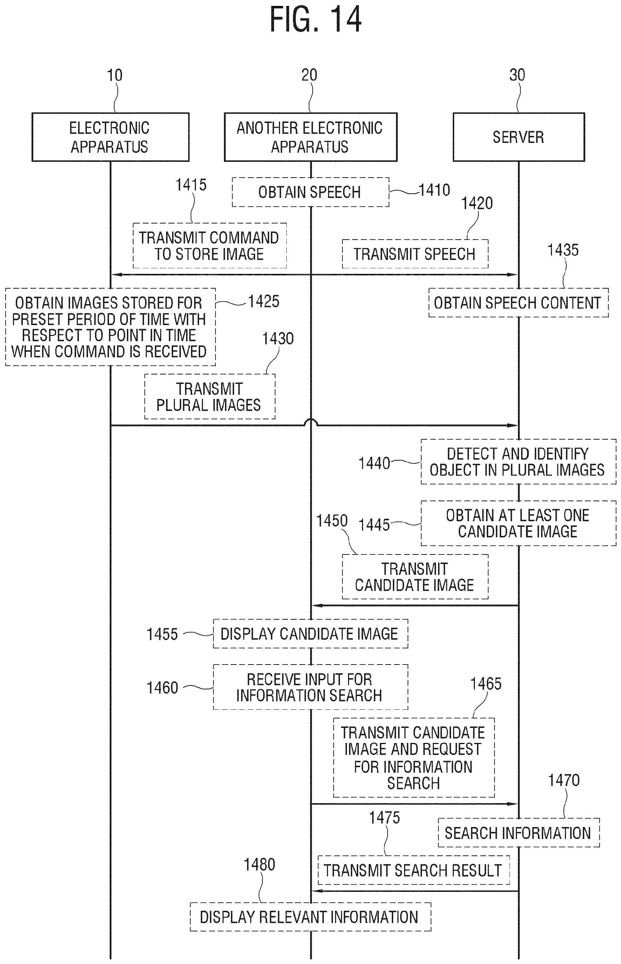

FIG. 14 is a flowchart showing a situation that information relevant to media content reproduced in the electronic apparatus is recommended as another electronic apparatus receives a speech in a system for recommending relevant information according to an alternative embodiment.

At operation 1410, the different electronic apparatus 20 may obtain a speech. For example, the electronic apparatus 10 may receive a user's speech that requests relevant information related to media content being reproduced.

At operation 1415, the different electronic apparatus 20 may transmit a command, which requests an image of content being currently reproduced to be stored and transmitted to the server 30, to the electronic apparatus 10 in response to the reception of the speech.

At operation 1420, the different electronic apparatus 20 may transmit the received speech to the server 30.

According to an embodiment, the operation 1415 and the operation 1420 may be carried out at the same time. Alternatively, the operation 1420 may be carried out before the operation 1415.

At operation 1425, the electronic apparatus 10 may obtain images which have been stored for a preset period of time with respect to a point in time when the command is received.

At operation 1430, the electronic apparatus 10 may transmit the plurality of obtained images to the server 30.

At operation 1435, the server 30 may obtain the speech content.

At operation 1440, the server 30 may detect and identify objects included in the plurality of images based on the obtained speech content.

At operation 1445, the server 30 may obtain at least one candidate image.

At operation 1450, the server 30 may transmit the candidate image to the different electronic apparatus 20.

At operation 1455, the different electronic apparatus 20 may display the received candidate image.

At operation 1460, the different electronic apparatus 20 may receive a user input for checking the proceedings of the information search for the candidate image.

At operation 1465, the different electronic apparatus 20 may transmit the candidate image and the search request command to the server 30.

At operation 1470, the server 30 may search for information relevant to the candidate image.

At operation 1475, the server 30 may transmit a search result to the different electronic apparatus 20.

At operation 1480, the different electronic apparatus 20 may display the received relevant information.

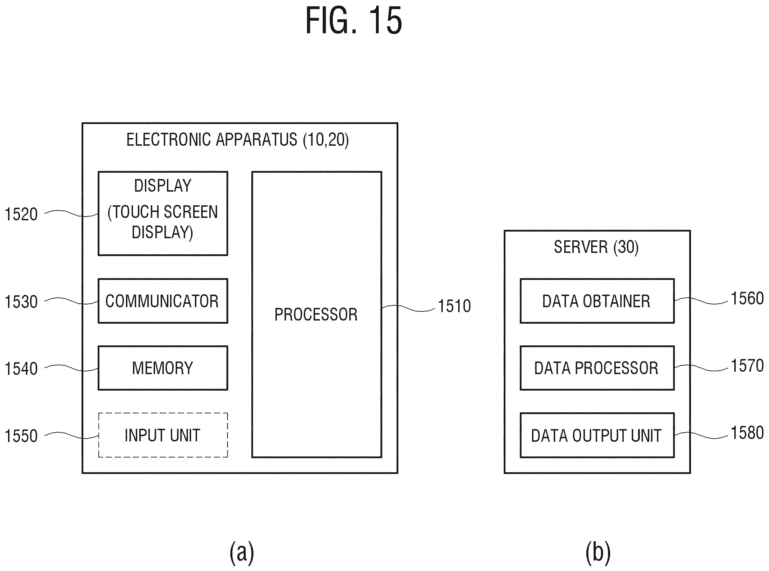

FIG. 15 is a schematic block diagram of an electronic apparatus, another electronic apparatus and a server according to an embodiment.

Referring to (a) in FIG. 15, the electronic apparatus 10 or the different electronic apparatus 20 may include a processor 1510, a display (or a touch screen display) 1520, a communicator 1530, and a memory 1540. According to an alternative embodiment, the electronic apparatus 10 or the different electronic apparatus 20 may include an input unit 1550. However, there are no limits to such embodiments. The electronic apparatus 10 or the different electronic apparatus 20 may further include elements or exclude some elements.

According to an embodiment, the processor 1510 may control general operations of the electronic apparatus 10 or the different electronic apparatus 20. For example, the processor 1510 may control the input unit 1550 to receive a user's input. The processor 1510 may control the display 1520 to display an image. The processor 1510 may control the memory 1540 to execute a program stored in the memory 1540, and load or store necessary information.

An electronic apparatus according to an embodiment includes a display, a communicator, a processor and a memory, in which the memory may be configured to store instructions set for the processor to obtain a plurality of images relevant to media content stored for a preset period of time with respect to a point in time when an object identifying command is received, as the command that requests identification of an object contained in the media content being displayed on the display is received from a different electronic apparatus through the communicator, identify objects contained in the plurality of images, obtain at least one candidate image including the object being displayed, and control the communicator to transmit the at least one candidate image to the different electronic apparatus.

In the electronic apparatus according to an embodiment, the plurality of images may include an image which contains the object being displayed on the display at a point in time when the information search command is received.

In the electronic apparatus according to an embodiment, the instructions may be set for the processor to detect an object included in the plurality of images, and then identify the object.

In the electronic apparatus according to an embodiment, the instruction may be set for the processor to convert the plurality of images into images in which edge components are emphasized, and detect an object from the converted images.

In the electronic apparatus according to an embodiment, the instructions may be set for the processor to learn objects contained in the plurality of images by applying the plurality of images to a data recognition model learned using an artificial intelligence algorithm, and the data recognition model may include a data recognition model learned based on data in which an image and a name of an object contained in the image are regarded as learning data.

In the electronic apparatus according to an embodiment, the electronic apparatus may further include an input unit, in which the instructions are set for the processor to identify the object contained in the plurality of images in preset order when the speech is obtained through the input unit.

A different electronic apparatus according to an embodiment includes a touch screen display, a communicator, a processor and a memory, in which the memory may be configured to store instructions set for the processor to control the touch screen display to display an information search user interface that guides a search request for relevant information about an object contained in media content being displayed in the electronic apparatus, control the communicator to transmit an object identifying command for requesting identification of the object contained in the media content being reproduced in the electronic apparatus to the electronic apparatus as an input for selecting the information search object included in the user interface is selected and to receive at least one candidate image obtained by the electronic apparatus, and control the touch screen display to display the at least one received candidate image.

In the different electronic apparatus according to an embodiment, the information search user interface may include a first information search object to request a search for a person, a second information search object to request a search for goods, and a third information object to request a search a place.

In the different electronic apparatus according to an embodiment, the instructions may be set for the processor to control the communicator to transmit a command, which requests a search for information relevant to a selected image, to a server, as an input for selecting a certain image among the at least one candidate images is received.

In the different electronic apparatus according to an embodiment, the instructions are set for the processor to control the communicator to receive relevant information about the candidate image, obtained corresponding to the command requested for the relevant information search by the server, and control the display to display the relevant information.

According to an embodiment, the display 1520 may display an image or video, and/or a running screen of an application. When the display 1520 is embodied by a touch screen display, the display 1520 may be used as an input apparatus as well as an output apparatus. The display 1520 may include at least one of a liquid crystal display, a thin film transistor-liquid crystal display, an organic light-emitting diode), a flexible display, a 3D display, and an electrophoretic display.

According to an embodiment, the communicator 1530 may connect the electronic apparatuses 10 and 20 with an external apparatus under control of the processor 1510. The communicator 1530 may include one of elements for various wired or wireless communication methods such as wireless local area network (WLAN), Bluetooth, wired Ethernet, etc. according to the performance and structure of the electronic apparatuses 10 and 20.

According to an embodiment, the memory 1540 may include a storage medium of at least one type of a flash memory type, a hard disk type, a multimedia card micro type, a card type (for example, an SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

Referring to (b) in FIG. 15, the server 30 may include a data obtainer 1560, a data processor 1570, and a data output unit 1580.

According to an embodiment, the data obtainer 1560 may receive data from the external apparatus. For example, the data obtainer 1560 may obtain a user's speech and a plurality of images obtained by the electronic apparatus 10.

According to an embodiment, the data processor 1570 may process the obtained data, or generate new data based on the obtained data. For example, the data processor 1570 may obtain speech content that requests a search for information relevant to an object contained in the media content being reproduced in the electronic apparatus 10 by recognizing a speech, and obtain at least one candidate image by identifying the object contained in the plurality of images based on the speech content.

According to an embodiment, the data output unit 1580 may output data processed or newly generated by the data processor 1570. For example, the data output unit 1580 may transmit at least one candidate image to the different electronic apparatus 20.

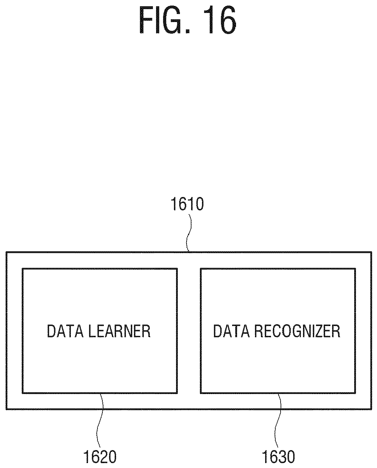

FIG. 16 is a block diagram of a processor according to an embodiment.

Referring to FIG. 16, a processor 1610 according to various embodiments may include a data learner 1620 and a data recognizer 1630. The processor 1610 may include the processor 1510 of FIG. 15 and the data processor 1570 of FIG. 15.

The data learner 1620 may perform learning to make the data recognition model have a criterion for detecting and identifying an object from the image. The data learner 1620 may perform learning to make the data recognition model have a criterion for what learning data is used to detect and identify (or recognize) an object from an image, or how the object is detected and identified from the image based on the learning data.

According to an embodiment, the data learner 1620 may use an image and a name of an object included in the image as the learning data to teach the data recognition model.

For example, the learning data may be a human face image and a name of a person. Alternatively, the learning data may be a bag image and the brand of the bag. Alternatively, the learning data may be a building image and the name or location information of the building.

Like this, the data learner 1620 may use various images and a name of an object contained in the image as the learning data to teach the data recognition model.

The data recognizer 1630 may identify an object contained in an image, based on various kinds of recognition data. The data recognizer 1630 may use the learned data recognition model to detect and identify (or recognize) the object contained in the image based on the input image.

According to an embodiment, the data recognizer 1630 may use an input image as an input value for the data recognition model, thereby using a result of identifying the object contained in the image and a user's response (or feedback) to the identification result to update the data recognition model.

For example, when an image including a person is input, the data recognizer 1630 may detect and identify the person to thereby obtain the name of the person.

The data recognition model may be established in consideration of application fields of recognition models, learning purposes, or computing performance of an apparatus, etc. The data recognition model may, for example, be a model based on a neural network. The data recognition model may be designed to simulate a human brain structure on a computer. The data recognition model may include a plurality of network nodes weighted to simulate neurons of the human neural network. The plurality of network nodes may form a connection relationship therebetween to simulate synaptic activities of the neurons that exchange a signal via a synapse. The data recognition model may for example include a neural network model, or a deep learning model developed from the neural network model. In the deep-learning model, the plurality of network nodes are positioned in different depths (or different layers) and exchange data according to convolution connections. For example, a deep neural network (DNN), a recurrent neural network (RNN), a bidirectional recurrent deep neural network (BRDNN) or the like data recognition model may be used, but not limited thereto.

At least one of the data learner 1620 and the data recognizer 1630 may be manufactured as at least one hardware chip, and loaded into the electronic apparatus. For example, at least one of the data learner 1620 and the data recognizer 1630 may be manufactured as a hardware chip dedicated for artificial intelligence (AI), or manufactured as a part of the existing universal processor (e.g.: a central processing unit (CPU) or application processor) or a graphic processor (e.g.: graphic processing unit (GPU)) and provided to the various electronic apparatuses as described above.

According to an embodiment, a dedicated hardware chip for the AI refers to a dedicated processor specified for probability operation, which has higher parallel-processing performance than the existing general-purpose processor, and thus quickly processes operations in machine learning and the like AI fields.

The data learner 1620 and the data recognizer 1630 may be provided in one electronic apparatus, or may be respectively provided in separate electronic apparatuses. For example, one of the data learner 1620 and the data recognizer 1630 may be provided in the electronic apparatus 10 or the different electronic apparatus 20, and the other one may be provided in the server 30. Further, the data learner 1620 and the data recognizer 1630 may communicate with each other by a wire or wirelessly, so that information about the data recognition model established by the data learner 1620 can be provided to the data recognizer 1630, and data input to the data recognizer 1630 can be provided as additional learning data to the data learner 1620.

Meanwhile, at least one of the data learner 1620 and the data recognizer 1630 may be embodied by a software module. When at least one of the data learner 1620 and the data recognizer 1630 is embodied by a software module (or a program module including the instructions), the software module may be stored in non-transitory computer readable media. Further, in this case, at least one software module may be provided by an operating system (OS) or a predetermined application. Alternatively, a part of at least one software module may be provided by the OS, and the rest may be provided by a predetermined application.

The term "module" used in the disclosure may include a unit embodied by hardware, software or firmware, and may for example used compatibly with logic, logic block, parts, circuit, or the like term. The module may refer to parts integrated into a single body, or the minimum unit or a portion of the part that performs one or more functions. For example, according to an embodiment, the module may be embodied in the form of an application-specific integrated circuit (ASIC).

Various embodiments of the disclosure may be carried out by software including one or more instructions stored in a storage medium (e.g.: a memory) readable by a machine (e.g.: the electronic apparatus 10 or the different electronic apparatus 20). For example, the processor (e.g.: the processor 1510) of the machine (e.g.: the electronic apparatus 10 or the different electronic apparatus 20) may call at least one command among one or more stored instructions from the storage medium, and execute the command. This enables the machine to operate for carrying out at least one function based on the at least one called instruction. The one or more instructions may include a code generated by a compiler or executable by an interpreter. The machine-readable storage medium may be provided in the form of a non-transitory storage medium. Here, 'non-transitory' merely means that the storage medium is a tangible apparatus and does not include a signal (e.g.: electromagnetic waves), and this term does not distinguish between a case where data is semi-permanently stored in the storage medium and a case where data is temporarily stored in the storage medium.

According to an embodiment, the methods according to various embodiments of the disclosure may be provided as involved in a computer program product. The computer program product may be traded as goods between a seller and a buyer. The computer program product may be distributed in the form of a machine-readable storage medium (e.g.: a compact disc read only memory (CD-ROM)), or may be directly online distributed (e.g.: downloaded or uploaded) between two user apparatuses (e.g.: smartphones) or through an application store (e.g.: Play Store ™). In a case of the online distribution, at least a part of the computer program product may be transitorily storage or temporarily generated in the machine-readable storage medium such as a server of a manufacturer, a server of an application store, or a memory of a relay server.

According to various embodiments, the elements (e.g.: a module or a program) of the foregoing configurations may include a single or a plurality of entities. According to various embodiments, one or more elements or operations of the foregoing configurations may be omitted, or one or more other elements or operations may be added. Alternatively or additionally, the plurality of elements (e.g.: the module or the program) may be integrated into a single configuration. In this case, the integrated configuration may perform one or more functions of the elements of the plurality of configurations equally or similarly to those performed by the corresponding elements of the plurality of configurations before they are integrated. According to various embodiments, the operations performed by the module the program or other elements may be performed in sequence, in parallel, repetitively or heuristically, or one or more among the operations may be carried out in different order, omitted or added with one or more other operations.

## Claims

1. An electronic apparatus comprising:
a display;
a communicator;
a processor; and
a memory,
the memory being configured to store instructions set for the processor to:
obtain a plurality of images relevant to media content being displayed on the display, which are stored for a preset period of time with respect to a point in time when an object identifying command that requests identification of an object contained in the media content is received, as the command is received from a different electronic apparatus through the communicator,
obtain at least one candidate image that contains the object being displayed, by identifying objects contained in the plurality of images, and
transmit the at least one candidate image to the different electronic apparatus by controlling the communicator.

2. The electronic apparatus according to claim 1, wherein the plurality of images comprises an image that contains the object being displayed on the display at a point in time when the information search command is received.

3. The electronic apparatus according to claim 1, wherein the instructions are set for the processor to detect an object contained in the plurality of images, and then identify the detected object.

4. The electronic apparatus according to claim 3, wherein the instructions are set for the processor to convert the plurality of images into images in which edge components are emphasized, and then detect an object in the converted images.

5. The electronic apparatus according to claim 1, wherein
the instructions are set for the processor to identify objects contained in the plurality of images by applying a data recognition model learned based on an artificial intelligence (AI) algorithm to the plurality of images, and
the data recognition model comprises a data recognition model learned based on learning data such as an image and a name of an object contained in the image.

6. The electronic apparatus according to claim 1, further comprising an input unit,
wherein the instruction are set for the processor to identify an object contained in the plurality of images in preset order based on a speech obtained through the input unit.

7. A different electronic apparatus comprising:
a touch screen display;
a communicator;
a processor; and
a memory,
the memory being configured to store instructions set for the processor to:
control the touch screen display to display an information search user interface that guides a search request for information relevant to an object contained in media content being displayed in an electronic apparatus,
transmit an object identifying command, which requests identification of an object contained in media content being reproduced in the electronic apparatus, to the electronic apparatus, and receive at least one candidate image obtained in the electronic apparatus based on the request, by controlling the communicator as an input for selecting an information search object included in the user interface, and
display the at least one received candidate image by controlling the touch screen display.

8. The different electronic apparatus according to claim 7, wherein the information search user interface comprises a first information search object to request a search for a person, a second information search object to request a search for goods, and a third information search object to request a search for a place.

9. The different electronic apparatus according to claim 7, wherein the instructions are set for the processor to transmit a command, which requests a search for information relevant to an image among the at least one candidate image, to a server, by controlling the communicator, as an input for selecting the image is received.

10. The different electronic apparatus according to claim 9, wherein the instructions are set for the processor to control the communicator to receive relevant information about the candidate image obtained by the server based on the command that requests a search for the relevant information, and control the display to display the relevant information.

11. A method of controlling an electronic apparatus, comprising:
obtaining a plurality of images relevant to media content being displayed on a display of the electronic apparatus, which are stored for a preset period of time with respect to a point in time when an object identifying command that requests identification of an object contained in the media content is received, as the command is received from a different electronic apparatus;
obtaining at least one candidate image that contains the object being displayed, by identifying objects contained in the plurality of images; and
transmitting the at least one candidate image to the different electronic apparatus.

12. The method according to claim 11, wherein the plurality of images comprises an image that contains the object being displayed on the display at a point in time when the information search command is received.

13. The method according to claim 11, further comprising detecting an object contained in the plurality of images, and then identify the detected object.

14. The method according to claim 13, further comprising converting the plurality of images into images in which edge components are emphasized, and then detecting an object in the converted images.

15. The method according to claim 11, further comprising identifying objects contained in the plurality of images by applying a data recognition model learned based on an artificial intelligence (AI) algorithm to the plurality of images,
wherein the data recognition model comprises a data model learned based on learning data such as an image and a name of an object contained in the image.
